# FASCICULE DE BREVET EUROPEEN

(11) **EP 0 860 260 B1**
(45) Date de publication et mention de la délivrance du brevet: **30.01.2002**
(21) Numéro de dépôt: 98101810.4
(22) Date de dépôt: 03.02.1998
(51) Int. Cl.: B29C 33/30, B29D 30/06

(54) **Moule pour pneus**
Reifenformwerkzeug
Tyre mould

(30) Priorité: 19.02.1997 FR 9702051
(43) Date de publication de la demande: 26.08.1998
(73) Titulaire: SEDEPRO, F-75015 Paris (FR)
(72) Inventeur: Ladouce, Jean-Pierre, 1700 Fribourg (CH)
(74) Mandataire: Bauvir, Jacques

(56) Documents cités:
- EP-A- 0 569 909
- US-A- 4 013 390
- US-A- 5 120 209

## Description

La présente invention concerne la fabrication des pneus. Plus précisément, elle se rapporte au moulage de la bande de roulement de ceux-ci.

La demande de brevet EP 0 569 909 décrit un type de moule dans lequel un très grand nombre de tôles disposées transversalement assurent le moulage de la bande de roulement. On dit ici que les tôles, c'est-à-dire les éléments de moulage, sont orientés transversalement parce que, en considérant le pneu, ils s'étendent d'une épaule à l'autre de celui-ci.

L'ouverture et la fermeture de ce type de moule imposent de prévoir un déplacement coordonné, dans une direction radiale, de tous les éléments de base de la couronne périphérique feuilletée. Il se peut que les cycles successifs d'ouverture et de fermeture du moule provoquent à la longue une inclinaison des tôles par rapport à leur orientation initiale, notamment en raison de frottements parasites responsables de désalignements ou de glissements des tôles lors de leurs mouvements accompagnant l'ouverture et la fermeture du moule. En outre, il peut s'avérer difficile de maintenir une répartition des jeux entre tôles aussi régulière que souhaitable. En conséquence, des bavures de moulage peuvent apparaître là où le jeu entre tôles est devenu bien supérieur au jeu nominal. Or le but poursuivi est de choisir le jeu nominal, comme expliqué dans le brevet EP 0 569 909, précisément pour éviter que le caoutchouc puisse fluer entre les tôles pendant toute la course de fermeture du moule.

L'objectif de l'invention est de pallier cet inconvénient, afin d'améliorer l'aptitude d'un moule de ce type à mouler des pneus d'une grande qualité d'aspect, notamment d'une qualité d'aspect qui reste constante après de nombreux cycles de moulage.

L'invention propose un moule pour bande de roulement de pneu, comportant une couronne périphérique feuilletée pour le moulage de l'extérieur de la bande de roulement, ladite couronne périphérique feuilletée étant constituée par un empilage dans la direction circonférentielle d'une pluralité d'éléments adjacents de faible épaisseur et montés sur un support, lesdits éléments étant orientés sensiblement radialement et agencés de telle sorte qu'il existe une répulsion élastique entre éléments, ladite répulsion élastique étant contenue par une frette dont le mouvement axial contrôle le mouvement radial desdits éléments, le moulage de ladite bande de roulement étant effectué par la tranche radialement intérieure desdits éléments, ladite tranche radialement intérieure ayant le profil voulu, caractérisé en ce que lesdits éléments comportent des éléments standards et des éléments intermédiaires qui se succèdent circonférentiellement et en ce que le moule comporte des moyens d'alignement coopérant avec lesdits éléments intermédiaires pour imposer l'orientation desdits éléments intermédiaires par rapport à la direction radiale. De préférence, le moule comporte plusieurs groupes d'un ou de quelques éléments intermédiaires adjacents, qui divisent ladite couronne en secteurs sensiblement réguliers, les éléments standards étant disposés entre lesdits groupes d'éléments intermédiaires.

Dans le présent mémoire, lorsque l'on qualifie d'intérieure une pièce ou une surface, cela signifie qu'elle se situe plutôt vers le centre du moule, c'est-à-dire du côté de la cavité interne de moulage. Lorsque c'est le qualificatif extérieur qui est utilisé, cela signifie qu'elle se situe plutôt loin de ladite cavité de moulage. Par exemple, s'agissant des tôles moulant la bande de roulement, le côté ou la tranche intérieur est la surface en contact avec le caoutchouc lors du moulage, alors que le côté ou la tranche extérieure est la surface en contact avec la frette.

L'invention s'étend aussi à un procédé de fabrication d'un pneu utilisant un moule tel qu'il vient d'être décrit. En option, ce procédé peut comporter un noyau à la forme de fabrication de la cavité interne du pneu, sur lequel on assemble les constituants, puis qui assure le moulage de la cavité intérieure du pneu pendant la vulcanisation. Dans tous les cas, un avantage de ce procédé de moulage réside dans le fait qu'il assure une excellente éventation lors du moulage.

L'invention est illustrée en la décrivant dans son application à un mode particulier de réalisation du moule. Il s'agit de celui décrit plus spécifiquement en relation avec la figure 5 du brevet EP 0 569 909 précité. Ce type de moule permet de concilier les avantages des moules dits « à secteurs » avec les avantages des moules dits « en deux parties ». Pour un exposé général sur le fonctionnement d'un tel moule, le lecteur est invité à consulter le brevet EP 0 569 909 susmentionné, et en particulier la partie de ce brevet relative à la figure 5.

Les figures suivantes illustrent un mode de réalisation de l'invention et permettent d'en saisir tous les avantages.
La figure 1 est une coupe méridienne du moule de l'invention.
La figure 2 est une perspective d'un anneau assurant l'orientation des éléments intermédiaires.
La figure 3 montre un élément dit standard.
La figure 4 montre un élément intermédiaire.
Les figures 5 et 6 montrent des variantes de réalisation d'un élément intermédiaire.
La figure 7 est une vue latérale partielle d'une couronne périphérique feuilletée.
La figure 8 est une perspective illustrant un empilage d'éléments intermédiaires.

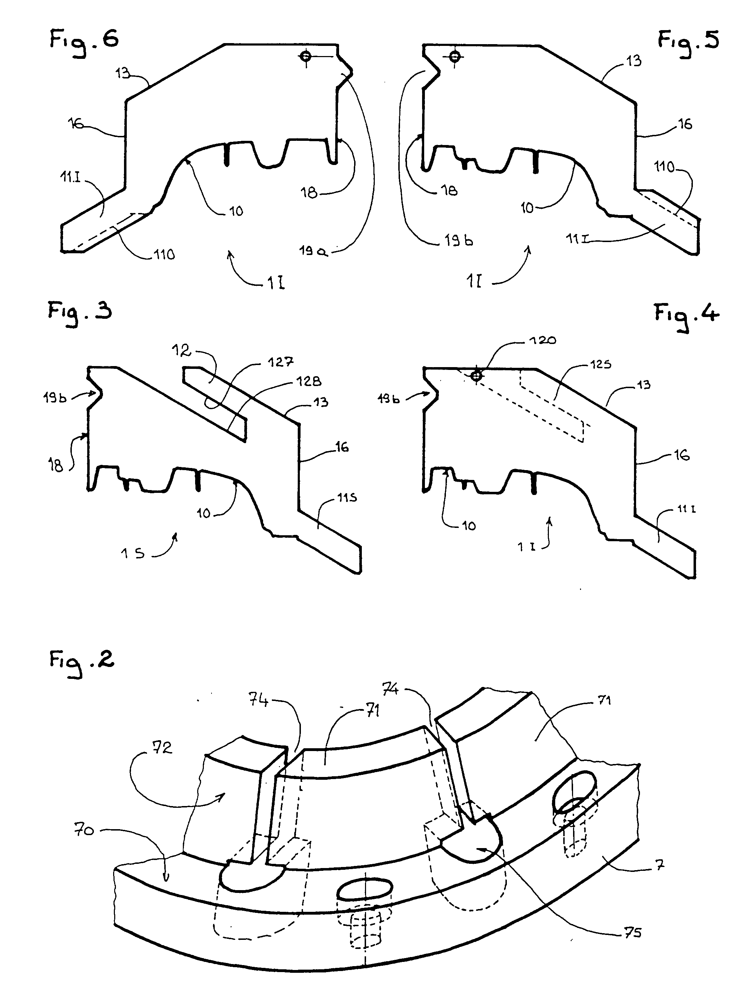

Dans ce mode de réalisation du moule, la couronne périphérique feuilletée, servant au moulage de la bande de roulement, est constituée par une multitude de tôles 1 adjacentes dont l'épaisseur est comprise entre 0.1 mm (et de préférence 0.5 mm) et 5 mm (voir figure 2). Une couronne feuilletée comprend plusieurs centaines de tôles adjacentes, voire quelques milliers. C'est une voie de réalisation très avantageuse des éléments de faible épaisseur caractéristiques de ce type de moule. L'épaisseur des tôles correspond à la résolution du moule pour définir la sculpture. On utilise par exemple des tôles d'acier; elles sont par exemple découpées toutes perpendiculairement à leur plan, selon un dessin qui est fonction des motifs de sculpture qu'il faut réaliser.

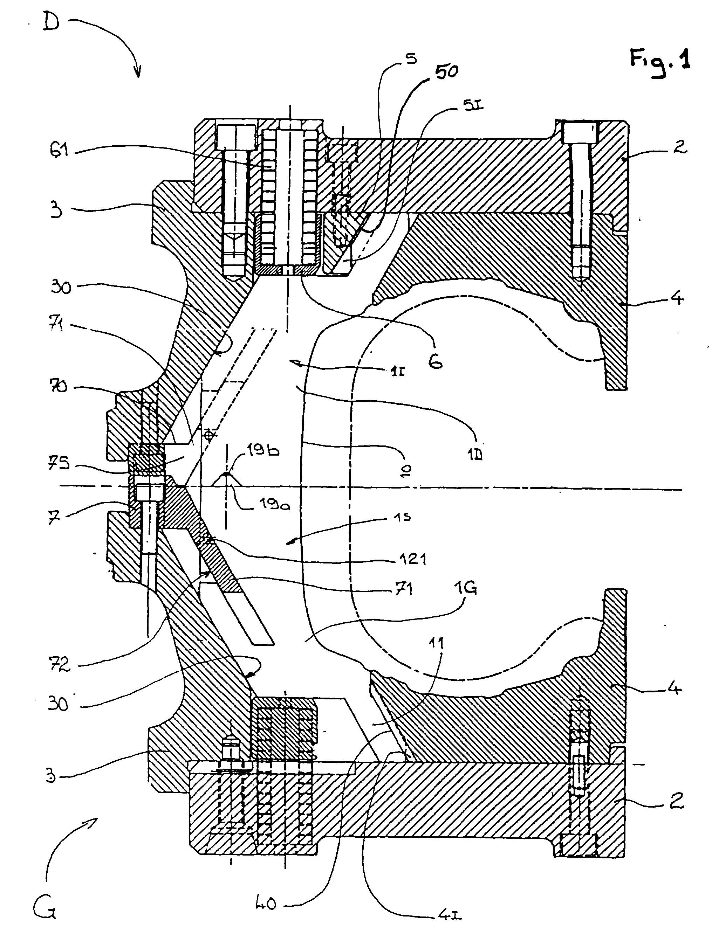

On voit à la figure 1 que la couronne est divisée en deux parties (G et D), et que la couronne comporte, transversalement, deux éléments distincts (1D et 1G) et adjacents appartenant chacun à l'une des parties. Les tôles ou éléments moulants sont désignés en général par la référence 1. Lorsque l'on veut désigner plus spécifiquement un élément ou une partie d'élément appartenant à la partie G, on utilise la référence 1G. Lorsque l'on veut désigner plus spécifiquement un élément ou une partie d'élément appartenant à la partie D, on utilise la référence 1D. De même, comme cela apparaîtra ci-dessous, on utilise les indices I et S pour désigner respectivement les éléments ou parties d'élément intermédiaires et standards.

La figure 3 montre un élément standard 1S et la figure 4 montre un élément intermédiaire 1I. Parmi les caractéristiques communes aux éléments standards 1S et aux éléments intermédiaires 1I, on voit que chacun des éléments comporte du côté radialement intérieur une partie moulante 10, découpée ou conformée selon le motif de sculpture à mouler. La tranche intérieure des éléments présente donc un profil dicté par la sculpture qu'il faut mouler.

De préférence, au moins l'extrémité côté partie moulante 10 des éléments 1 présente une épaisseur progressivement décroissante en se déplaçant radialement vers l'axe du moule. Chacun des éléments forme ainsi un léger coin, dont l'angle correspond sensiblement à la valeur obtenue en divisant 360° par le nombre d'éléments sur un tour dans la couronne périphérique de moulage. Chacun des éléments standards 1S et intermédiaires 1I comporte un prolongement latéral 11, un bord latéral 16, une tranche extérieure inclinée 13, et un bord central 18 destiné à venir en contact sur l'autre partie avec le bord central 18 correspondant de l'élément adjacent de ladite autre partie. Notons encore la présence d'un ergot 19a sur chacune des tôles 1 de la partie G, engagé dans une découpure 19b réalisée sur chaque tôle 1 de la partie D, afin de positionner avec grande précision les tôles 1 à la même hauteur radialement pendant toute la phase de fermeture du moule.

Les éléments standards 1S comportent tous une découpure dans leur partie opposée à la tranche de moulage 10. Cette découpure fait apparaître une patte 12 et une tranche 127 sur le côté radialement intérieur de cette patte 12. Bien qu'ils en soient dépourvus, le tracé de cette découpure est rappelé par le trait pointillé 125 sur les éléments intermédiaires 1I, afin de mettre en évidence la position d'un trou 120, tangent audit tracé à l'endroit bien visible à la figure 4.

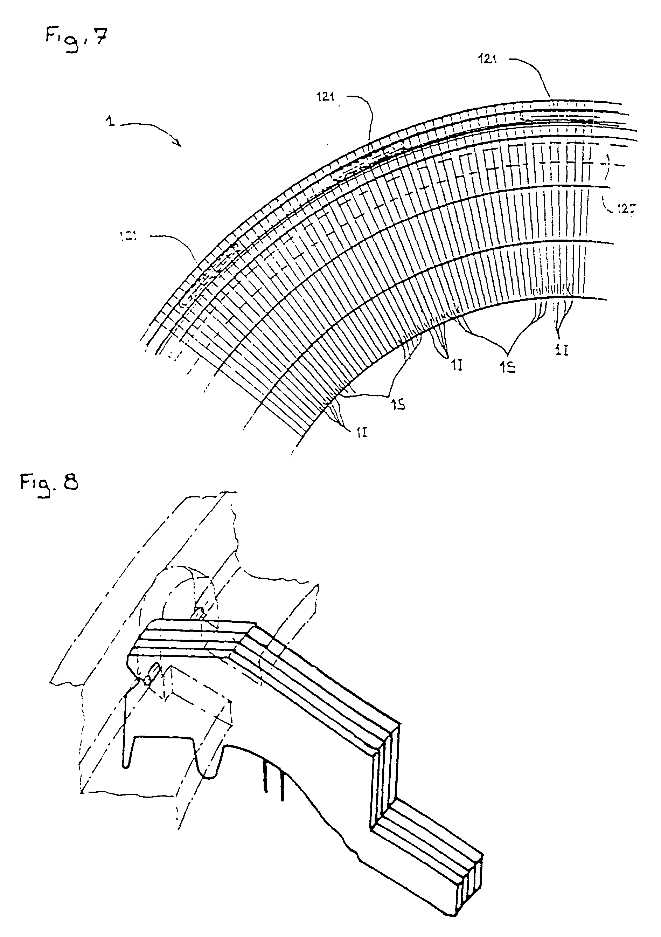

Pour former la couronne périphérique feuilletée, les éléments 1 sont disposées tous selon le même angle par rapport à la direction radiale. Dans cet exemple, les éléments sont disposés de façon radiale. Autrement dit, lorsque l'on examine la couronne périphérique feuilletée en coupe selon un plan perpendiculaire à l'axe du moule (voir figure 7), les éléments sont disposés de façon à comprendre un rayon, c'est à dire selon un angle de 90° pour reprendre la terminologie usuelle pour caractériser la trajectoire des câblés dans le pneu. Eventuellement, on peut admettre que les éléments soient disposés selon un angle légèrement différent de 90°, s'en écartant par exemple d'environ 10° à 15°.

Dans chacune des parties G et D, le moule comporte un plateau 2 sur lequel est montée une frette 3. La frette 3 présente une portée tronconique 30 d'angle α, radialement intérieure, en contact avec lesdits éléments 1 sur leur tranche radialement extérieure 13. Cette frette permet de comprimer radialement les tôles 1 pour les amener et les maintenir dans leur position de fermeture, telle que représentée à la figure 1.

Le plateau 2 porte aussi un ou plusieurs organes de guidage 5 des éléments, comportant une portée tronconique 50 dirigée radialement vers l'intérieur, inclinée au même angle α que la portée tronconique 30. Le plateau supporte aussi des coquilles 4 servant au moulage des flancs. Une portée tronconique 40 dirigée radialement vers l'extérieur, inclinée au même angle α que la portée tronconique 30, est aménagée sur le bord radialement extérieur de la coquille 4. Les prolongements latéraux 11 de tous les éléments sont insérés entre coquille 4 et organes de guidage 5, entre lesdites portées tronconiques.

Afin de faciliter en général le mouvement d'ouverture du moule, un cerceau 6 développe une force axiale contre les bords latéraux 16 de tous les éléments 1, grâce à un ou des ressorts 61 orientés axialement, qui, disposés axialement entre ledit cerceau 6 et le plateau 2, exercent une répulsion élastique entre plateau 2 et cerceau 6. Cela favorise un bon synchronisme du mouvement de tous les éléments, quelle que soit leur position, notamment quelle que soit la résistance à l'arrachement hors de la sculpture qu'ils puissent offrir à la fin de la vulcanisation.

Un anneau 7 est fixé à l'extrémité de la frette 3 la plus éloignée du plateau 2. Une butée 70 limitant le mouvement des éléments 1 lors de l'ouverture du moule est intégrée à l'anneau 7. L'anneau comporte un certain nombre de becs 71 disposés à la partie radialement intérieure dudit anneau, des fentes 74 apparaissant entre lesdits becs (figure 2). Les éléments intermédiaires 1I se glissent dans ces fentes 74 (figure 1, partie D). L'anneau 7 comporte un dégagement 75 en regard de chaque fente 74. Les becs 71 comportent, du côté radialement extérieur, une rampe 72 dont le rôle est d'assister à l'ouverture du moule en arrachant et en guidant les tôles 1, en appuyant sur leur tranche 127.

Selon un aspect proposé par la présente invention, plusieurs groupes d'un ou de quelques éléments intermédiaires 1I adjacents divisent chaque couronne en secteurs sensiblement réguliers (figure 7). Les éléments standards 1S sont disposés entre lesdits groupes d'éléments intermédiaires 1I. Dans le mode de réalisation illustré ici, chacune des parties G et D de la couronne comporte des éléments standards 1S et des éléments intermédiaires 1I, les plans de coupe de la partie G et de la partie D de la figure 1 étant choisis pour montrer un élément standard 1S comme premier élément visible à la partie G et un élément intermédiaire 1I comme premier élément visible à la partie D. On voit à la figure 2 que les éléments intermédiaires 1I sont dans cette réalisation disposés par paquets de quelques-uns, par exemple par paquets de 4 à 10 éléments adjacents, cette caractéristique étant bien sûr non limitative.

Le maintien des éléments intermédiaires 1I est ainsi assuré par les fentes 74, qui sont orientées radialement pour maintenir les éléments intermédiaires 1I. Les fentes 74 assurent un maintien de l'orientation des éléments intermédiaires 1I, et un guidage de ceux-ci pendant les mouvements d'ouverture et de fermeture du moule. Les dispersions de positionnement sont ainsi minimisées car les écarts, s'il en subsiste, ne se cumulent que sur une petite partie de la circonférence. Les jeux entre éléments se répartissent de façon plus homogène.

Pour monter le moule en atelier, ou plus précisément pour monter chacune des parties G et D du moule, on part d'un support constitué par l'anneau 7. Tous les éléments standards 1S et les éléments intermédiaires 1I sont préparés pour être montés sur l'anneau 7 dans l'ordre requis par la sculpture à mouler. Les éléments standards sont enfilés à cheval sur les becs 71, la patte 12 d'un côté de celui-ci et le reste de l'élément de l'autre. On enfile une goupille 121 dans les trous 120 d'un groupe d'éléments intermédiaires 1I (voir figures 1, 7 et 8). C'est afin de pouvoir faire glisser et loger ladite goupille 121 que sont ménagés les évidements 75 dans l'anneau 7. On monte le groupe d'éléments intermédiaires en faisant glisser les parties débordantes de la goupille 121 sur les éléments standards adjacents, tout en insérant ledit groupe dans une fente 74.

Notons que les dimensions du dégagement 75 sont calculées afin de permettre cette installation. En particulier, la largeur des dégagements dans la direction périphérique est légèrement supérieure à la longueur des goupilles 121. Chaque goupille prend appui sur la tranche radialement extérieure 128 d'un de ou quelques éléments standards 1S adjacents, ce qui empêche les éléments intermédiaires de basculer radialement vers l'intérieur car, grâce aux becs 71, aucun degré de liberté n'existe dans cette direction pour les éléments standards 1S. D'où la localisation du trou 120 par rapport à la découpure rappelée en trait pointillé 125 à la figure 4.

Afin d'améliorer le maintien des éléments intermédiaires, le moule comporte en option des rainures 5I, aménagées sur lesdits organes de guidage 5, et dans lesquelles lesdits éléments intermédiaires 1I sont insérés pour imposer la position circonférentielle desdits éléments intermédiaires 1I. Les organes de guidage sont constitués par de petits segments en arc de cercles, légèrement plus longs que chaque paquet d'éléments intermédiaires, juste suffisamment épais pour loger chaque rainure 5I. Les prolongements 11 sont montés avec jeu radial entre lesdits prolongements et les organes de guidage. Les éléments standards 1S sont empilés entre les paquets d'éléments intermédiaires 1I. Les éléments standards 1S sont ainsi guidés par les éléments intermédiaires 1I. La position circonférentielle et l'orientation desdits éléments, vus dans un plan perpendiculaire à l'axe du moule sont ainsi définies de façon plus positive grâce à un maintien des éléments intermédiaires agissant sur des portées éloignées les unes des autres (les fentes 74 et les rainures 5I).

A la figure 5, en ce qui concerne les éléments 1I, on peut remarquer que chacun des prolongements latéraux 11I est plus haut que pour les éléments standards 1S, dont la hauteur est rappelée par le trait pointillé 110. Le prolongement latéral 11I forme donc, par rapport aux prolongements latéraux des éléments standards adjacents, une saillie que l'on peut insérer dans une rainure 5I (figure 1).

Eventuellement, en face de chaque rainure 5I, une seconde rainure 4I est creusée dans la portée tronconique 40 disposée sur la coquille 4 (voir partie G de la figure 1). A la figure 6, on voit que chacun des prolongements latéraux 11I se développe radialement vers l'intérieur plus que pour les éléments standards 1S, dont la limite est rappelée par le trait pointillé 110. Le prolongement latéral 11I forme donc, par rapport aux prolongements latéraux des éléments standards adjacents, une saillie que l'on peut insérer dans ladite rainure. On peut utiliser des rainures 4I sur la coquille 4 à la place de ou en plus des rainures 5I prévues sur l'élément de guidage.

A la figure 6, on a représenté un élément appartenant à la partie G du moule. Il comporte donc un ergot 19a. A la figure 5, c'est un élément appartenant à la partie D du moule qui est représenté, en vis à vis de celui de la figure 6. Il comporte donc une découpure 19b correspondante. Bien entendu, cette caractéristique est indépendante du fait d'être un élément standard ou un élément intermédiaire, le dessin des figures 5 et 6 ayant aussi pour but de faciliter la compréhension de la coopération des éléments au niveau des bords centraux 18.

Bien entendu, de multiples variantes de réalisation peuvent être envisagées. Les éléments intermédiaires peuvent être engagés dans une rainure ou une fente unique. La ou les rainures peuvent avoir une allure tout à fait différente. La répartition entre éléments standards et éléments intermédiaires peut être différente. L'essentiel est de procurer une fonction de guidage dans le sens radial à au moins quelques éléments intermédiaires, de préférence répartis le long de la périphérie du moule.

## Revendications

1. Moule pour bande de roulement de pneu, comportant une couronne périphérique feuilletée pour le moulage de l'extérieur de la bande de roulement, ladite couronne périphérique feuilletée étant constituée par un empilage dans la direction circonférentielle d'une pluralité d'éléments (1) adjacents de faible épaisseur et montés sur un support, lesdits éléments étant orientés sensiblement radialement et agencés de telle sorte qu'il existe une répulsion élastique entre éléments (1), ladite répulsion élastique étant contenue par une frette dont le mouvement axial contrôle le mouvement radial desdits éléments, le moulage de ladite bande de roulement étant effectué par la tranche radialement intérieure desdits éléments, ladite tranche radialement intérieure ayant le profil voulu, **caractérisé en ce que** lesdits éléments comportent des éléments standards et des éléments intermédiaires qui se succèdent circonférentiellement et **en ce que** le moule comporte des moyens d'alignement coopérant avec lesdits éléments intermédiaires pour imposer l'orientation desdits éléments intermédiaires par rapport à la direction radiale.

2. Moule selon la revendication 1, dans lequel lesdits moyens d'alignement comportent des fentes aménagées dans ledit support et dans lesquelles lesdits éléments intermédiaires (1I) sont insérés.

3. Moule selon la revendication 2, dans lequel les fentes apparaissent sur un anneau monté sur ladite frette, entre des becs (71) disposés à la partie radialement intérieure dudit anneau, la partie radialement extérieure desdits éléments intermédiaires (1I) étant insérée dans cesdites fentes.

4. Moule selon la revendication 1, dans lequel lesdits moyens de guidage sont des rainures aménagées dans ledit support et dans lesquelles sont insérés lesdits éléments intermédiaires.

5. Moule selon la revendication 4, dans lequel chacun des éléments comporte un prolongement latéral disposé radialement vers l'intérieur des éléments, ledit moule comportant un organe de guidage des éléments, lesdites rainures étant creusées dans ledit organe de guidage pour recevoir ledit prolongement latéral des éléments intermédiaires (1I).

6. Moule selon l'une des revendications 1 à 5, dans lequel plusieurs groupes d'un ou de quelques éléments intermédiaires adjacents divisent ladite couronne en secteurs sensiblement réguliers, les éléments standards étant disposés entre lesdits groupes d'éléments intermédiaires.

7. Moule selon l'une des revendications 1 à 6, **caractérisé en ce que** la couronne est divisée en deux parties (G et D), **en ce que** la couronne comporte, transversalement, deux éléments distincts (1D et 1G) et adjacents appartenant chacun à l'une des parties, chacun présentant un bord (18) destiné à venir en contact sur l'autre partie avec le bord (18) correspondant de l'élément adjacent de ladite autre partie.

8. Moule selon l'une des revendications 1 à 7, **caractérisé en ce que** chaque élément (1) a une épaisseur comprise entre 0,1 mm et 5 mm, et **en ce que** l'extrémité côté tranche (10) de moulage desdits éléments (1) présente une épaisseur progressivement décroissante en se déplaçant radialement vers l'axe du moule.

9. Procédé de fabrication d'un pneu, **caractérisé en ce que** l'on utilise un moule selon l'une des revendications 1 à 8, dans lequel l'éventation du moule se fait grâce aux espaces entre éléments.

## Patentansprüche

1. Form für eine Luftreifen-Lauffläche, die einen geblechten Umfangskranz zur Formung der Außenseite der Lauffläche aufweist, wobei der geblechte Umfangskranz aus einer Stapelung in Umfangsrichtung von einer Vielzahl von auf einen Träger montierten, benachbarten Elementen (1) geringer Stärke besteht, wobei die Elemente im wesentlichen radial ausgerichtet und so angeordnet sind, daß zwischen Elementen (1) ein elastischer Rückstoß besteht, wobei dieser elastische Rückstoß von einer Zwinge aufgefangen wird, deren axiale Bewegung die radiale Bewegung der Elemente steuert, wobei das Formen der Lauffläche von der radial inneren Kante der Elemente durchgeführt wird, wobei diese radial innere Kante das gewünschte Profil aufweist, **dadurch gekennzeichnet, daß** die Elemente Normelemente und Zwischenelemente aufweisen, die in Umfangsrichtung aufeinander folgen, und daß die Form Ausrichtungsmittel aufweist, die mit den Zwischenelementen zusammenwirken, um die Ausrichtung der Zwischenelemente in bezug auf die radiale Richtung vorzugeben.

2. Form nach Anspruch 1, bei der die Ausrichtungsmittel Schlitze aufweisen, die im Träger ausgebildet sind und in die die Zwischenelemente (1I) eingefügt sind.

3. Form nach Anspruch 2, bei der die Schlitze sich auf einem auf die Zwinge montierten Ring zwischen Vorsprüngen (71) befinden, die im radial inneren Bereich des Rings angeordnet sind, wobei der radial äußere Bereich der Zwischenelemente (1I) in diese Schlitze eingefügt ist.

4. Form nach Anspruch 1, bei der die Führungsmittel im Träger ausgebildete Nuten sind, in die die Zwischenelemente eingefügt sind.

5. Form nach Anspruch 4, bei der jedes der Elemente eine seitliche Verlängerung aufweist, die radial zur Innenseite der Elemente angeordnet ist, wobei die Form ein Führungsorgan für die Elemente aufweist, wobei die Nuten im Führungsorgan ausgearbeitet sind, um die seitliche Verlängerung der Zwischenelemente (1I) aufzunehmen.

6. Form nach einem der Ansprüche 1 bis 5, bei der mehrere Gruppen von einem oder mehreren benachbarten Zwischenelementen den Kranz in im wesentlichen gleichmäßige Sektoren teilt, wobei die Normelemente zwischen den Gruppen von Zwischenelementen angeordnet sind.

7. Form nach einem der Ansprüche 1 bis 6, **dadurch gekennzeichnet, daß** der Kranz in zwei Teile (G und D) aufgeteilt ist, daß der Kranz in Querrichtung zwei getrennte und benachbarte Elemente (1D und 1G) aufweist, die je zu einem der Teile gehören und je einen Rand (18) aufweisen, der beim anderen Teil mit dem entsprechenden Rand (18) des benachbarten Elements des anderen Teils in Kontakt gelangen soll.

8. Form nach einem der Ansprüche 1 bis 7, **dadurch gekennzeichnet, daß** jedes Element (1) eine Stärke zwischen 0,1 mm und 5 mm hat, und daß das Ende auf der Seite der Formkante (10) der Elemente (1) eine radial in Richtung der Achse der Form progressiv abnehmende Stärke aufweist.

9. Verfahren zur Herstellung eines Luftreifens, **dadurch gekennzeichnet, daß** man eine Form nach einem der Ansprüche 1 bis 8 verwendet, bei der die Auslüftung der Form mit Hilfe der Zwischenräume zwischen Elementen erfolgt.

## Claims

1. A mould for a tyre tread, comprising a laminated peripheral crown for moulding the outside of the tread, said laminated peripheral crown consisting of a stack in the circumferential direction of a number of adjacent elements (1) of low thickness mounted on a support, said elements being oriented substantially radially and arranged in such a way that there is elastic repulsion between elements (1), said elastic repulsion being contained by a hoop, the axial movement of which controls the radial movement of said elements, said tread being moulded by the radially inside edge face of said elements, said radially inside edge face having the desired profile, **characterised in that** said elements comprise standard elements and intermediate elements which follow on from one another circumferentially, and **in that** the mould comprises alignment means interacting with said intermediate elements in order to impose the orientation of said intermediate elements with respect to the radial direction.

2. A mould according to Claim 1, wherein said alignment means comprise slots formed in said support and into which said intermediate elements (1I) are inserted.

3. A mould according to Claim 2, wherein the slots are on a ring mounted on said hoop, between projections (71) arranged on the radially inside part of said ring, the radially outside part of said intermediate elements (1l) being inserted into these said slots.

4. A mould according to Claim 1, wherein said guide means are grooves made in said support and into which said intermediate elements are inserted.

5. A mould according to Claim 4, wherein each of the elements has a lateral extension arranged radially toward the inside of the elements, said mould comprising a member for guiding the elements, said grooves being cut in said guide member to accommodate said lateral extension of the intermediate elements (11).

6. A mould according to one of Claims 1 to 5, wherein a number of groups of one or more adjacent intermediate elements split said crown into substantially uniform sectors, the standard elements being arranged between said groups of intermediate elements.

7. A mould according to one of Claims 1 to 6, **characterised in that** the crown is split into two parts (G and D), **in that** the crown comprises, transversely, two separate and adjacent elements (1D and 1G) each belonging to one of the parts, each having an edge (18) intended to come into contact on the other part with the corresponding edge (18) of the adjacent element belonging to said other part.

8. A mould according to one of Claims 1 to 7, **characterised in that** each element (1) has a thickness of between 0.1 mm and 5 mm, and **in that** the end (10) on the moulding edge-face side of said elements (1) has a thickness that decreases gradually as it progresses radially toward the axis of the mould.

9. A method of manufacturing a tyre, **characterised in that** use is made of a mould according to one of Claims 1 to 8, in which the mould is vented by means of the spaces between elements.
